# EUROPÄISCHE PATENTSCHRIFT

(11) **EP 1 176 653 B1**
(45) Veröffentlichungstag und Bekanntmachung des Hinweises auf die Patenterteilung: **23.06.2010**
(21) Anmeldenummer: 01115252.7
(22) Anmeldetag: 23.06.2001
(51) Int. Cl.: H01M 8/10, H01M 4/86, H01M 4/92, H01M 4/88

(54) **Membran-Elektrodeneinheit für Polymerelektrolyt-Brennstoffzellen und Verfahren zu ihrer Herstellung**
Membrane electrode unit for polymer electrolyte fuel cells and method of producing the same
Unité d'électrodes-membrane pour piles à combustible à électrolyte polymère et son procédé de fabrication

(30) Priorität: 29.07.2000 DE 10037072
(43) Veröffentlichungstag der Anmeldung: 30.01.2002
(73) Patentinhaber: Umicore AG & Co. KG, 63457 Hanau-Wolfgang (DE)
(72) Erfinder: Binder, Matthias, 63594 Hasselroth-Niedermittlau (DE); Zuber, Ralf, Dr., 63762 Grossostheim (DE); Vogt, Markus, Dr., 60598 Frankfurt am Main (DE); Heinz, Gerhard, 63594 Hasselroth-Niedermittlau (DE)
(74) Vertreter: Stellbrink, Axel

(56) Entgegenhaltungen:
- EP-A- 0 731 520
- EP-A- 0 736 921
- EP-A- 0 945 910
- DE-A1- 19 815 455
- US-A- 5 501 915
- PATENT ABSTRACTS OF JAPAN Bd. 1996, Nr. 03, 29. März 1996 (1996-03-29) & JP 07 296818 A (JAPAN GORE TEX INC), 10. November 1995 (1995-11-10)

## Beschreibung

Die Erfindung betrifft Brennstoffzellen, insbesondere PEM-Brennstoffzellen, bei denen ein festes Polymer als Elektrolyt eingesetzt wird.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die so genannte Polymerelektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Kraftfahrzeugen.

Die PEM-Brennstoffzelle besteht aus einer stapelweisen Anordnung ("Stack") von Membran-Elektrodeneinheiten (MEE), zwischen denen bipolare Platten zur Gaszufuhr und Stromleitung angeordnet sind. Eine Membran-Elektrodeneinheit besteht aus einer Polymerelektrolyt-Membran mit auf beiden Seiten aufgebrachten Reaktionsschichten und Gasverteilerschichten. Eine der Reaktionsschichten ist als Anode für die Oxidation von Wasserstoff und die zweite Reaktionsschicht als Kathode für die Reduktion von Sauerstoff ausgebildet. Die Anordnung aus Reaktionsschicht und Gasverteilerschicht wird im Rahmen dieser Erfindung als Elektrode der Membran-Elektrodeneinheit bezeichnet. Die Gasverteilerschichten bestehen gewöhnlich aus Kohlefaserpapier oder Kohlevlies und ermöglichen einen guten Zugang der Reaktionsgase zu den Reaktionsschichten und eine gute Ableitung des Zellenstroms. Die Reaktionsschichten für Anode und Kathode enthalten so genannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden so genannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Die Polymerelektrolyt-Membran besteht aus Protonen leitenden Polymermaterialien. Diese Materialien werden im folgenden auch kurz als Ionomere bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. du Pont vertrieben. Es sind jedoch auch andere, insbesondere fluorfreie Ionomermaterialien, wie sulfonierte Polyetherketone oder Arylketone oder Polybenzimidazole einsetzbar.

In der US 4,229,490 wird ein Verfahren zur Herstellung einer Brennstoffzellenelektrode vorgestellt. Dieses Verfahren umfaßt die Hydrophobierung eines Kohlefaserpapiers und die anschließende Beschichtung mit einer Graphit/Platinmohr/PTFE-Mischung und Sinterung. Die so hergestellten Brennstoffzellenelektroden haben eine hohe Platinbeladung und enthalten kein Protonen leitendes Polymer. Das eingesetzte Platin ist dadurch nur zu einem geringen Teil elektrolytisch angebunden.

Die US-PS 4,876,115 beschreibt ein Verfahren zur Behandlung einer porösen Gasdiffusionselektrode, welche eine Katalysatorbeladung von weniger als 0,5 mg/cm² auf Kohlenstoffpartikeln aufweist. Die Elektrode wird mit einer Lösung eines Protonen leitenden Materials imprägniert. Hierdurch werden die Oberflächen der Kohlenstoffpartikel mit dem Protonen leitenden Material beschichtet.

In der US-PS 5,234,777 wird eine Membran-Elektrodeneinheit vorgeschlagen, die aus einer Polymerelektrolyt-Membran und einer zusammengesetzten Schicht eines Platin-Trägerkatalysators und einem Ionomer besteht. Diese Schicht ist **dadurch gekennzeichnet, dass** sie weniger als 10 µm dick und der Platin-Trägerkatalysator gleichmäßig in dem Protonen leitenden Ionomer dispergiert ist. Die Platinbeladung der Elektroden beträgt weniger als 0,35 mg/cm². Die Elektrodenschichten sind mit der Polymerelektrolyt-Membran verbunden.

Zur Herstellung der Membran-Elektrodeneinheiten nach US-PS 5,234,777 werden verschiedene Verfahren beschrieben. In einer Ausführungsform wird der Pt/C-Trägerkatalysator in einer alkoholischen Lösung des Ionomers dispergiert. Diese Dispersion, auch als Tinte bezeichnet, wird auf eine PTFE-Trägerfolie (PTFE: Polytefluorethylen) aufgebracht, getrocknet und durch Heißpressen auf die gegenüberliegenden Seiten einer Polymerelektrolyt-Membran auflaminiert.

In einer weiteren Ausführungsform wird die Polymerelektrolyt-Membran direkt mit einer Tinte eines Pt/C-Trägerkatalysators und einer Lösung eines Ionomers beschichtet. Die aufgebrachte Schicht wird bei mindestens 150°C getrocknet.

Die Reaktionsschichten nach US-PS 5,234,777 zeichnen sich durch eine homogene Verteilung des Katalysators im Ionomer aus. Durch das Heißpressen werden dichte und porenfreie Schichten von weniger als 10 µm, bevorzugt von 5 µm Dicke, mit Platinbeladungen von weniger als 0,35 mg Pt/cm² hergestellt. Bei den Membran-Elektrodeneinheiten nach US-PS 5,234,777 ist aufgrund der dichten, porenfreien Reaktionsschicht der Zugang der Reaktionsgase zum Katalysator begrenzt. Dies wirkt sich negativ auf die elektrochemische Leistung der PEM-Zelle, insbesondere beim Betrieb mit verdünnten Gasen wie Luft oder Reformatgas, aus. Die mögliche Verwendung von Luft und Reformatgas anstelle von Sauerstoff und Wasserstoff ist jedoch eine wichtige Voraussetzung für den wirtschaftlichen Einsatz von Brennstoffzellen in Kraftfahrzeugen.

Ein weiterer Nachteil des in US-PS 5,234,777 beschriebenen Verfahrens ist die hohe Trocknungstemperatur von mindestens 150 °C. Bei diesen Bedingungen können sich Lösungsmitteldämpfe an der Katalysatorschicht entzünden und die Membran-Elektrodeneinheit zerstören.

In der DE 196 02 629 A1 wird ein Verfahren zur Herstellung einer Membran-Elektrodeneinheit vorgeschlagen, bei dem ein Edelmetallkatalysator auf einem Kohlenstoffträger verwendet wird, an dem das Ionomer als Kolloid adsorbiert ist. Dazu wird eine kolloidale Lösung des Ionomers in einem geeigneten organischen Lösungsmittel hergestellt und der Trägerkatalysator damit behandelt. Der mit dem Kolloid beschichtete Trägerkatalysator wird zu einer Tinte verarbeitet und damit eine Elektrode hergestellt, die mit der Polymerelektrolyt-Membran verpresst wird.

Die nach DE 196 02 629 A1 hergestellten Membran-Elektrodeneinheiten zeigen jedoch keinen verbesserten Zugang der Reaktionsgase zum Katalysator. Weiterhin ist es sehr schwierig, eine definierte und reproduzierbare Verteilung des Ionomers in kolloidaler Form auf dem Trägerkatalysator zu erreichen. Die Stabilität des kolloidalen Ionomers ist begrenzt. Die Übertragung des Verfahrens in eine Serienfertigung ist daher nur bedingt möglich.

In der EP 0 797 265 A1 wird eine Membran-Elektrodeneinheit für PEM-Brennstoff zellen mit einer hohen Gesamtporosität und verbesserter elektrochemischer Leistung beschrieben. Die hohe Porosität wird durch den Einsatz von Porenbildnern in Kombination mit einem speziellen Sprühverfahren erreicht. Das Verfahren besitzt den Nachteil, dass der Porenbildner zu Kontaminationen führt und zusätzliche Schritte benötigt werden, um den Porenbildner aus der Membran-Elektrodeneinheit zu entfernen.

In der EP 0 736 921 A1 wird eine Elektrode beschrieben, die eine Anode oder Kathode sein kann, und die eine erste katalytische Komponente und eine zweite katalytische Komponente umfasst, **dadurch gekennzeichnet, dass** die erste katalytische Komponente an Gasphasenreaktionsstellen aktiv ist und die zweite katalytische Komponente an elektrochemischen Reaktionsstellen aktiv ist, mit der Maßgabe, dass die erste katalytische Komponente und die zweite katalytische Komponente miteinander in physikalischen Kontakt stehen, wenn die Elektrode eine Anode ist.

In JP 07 296818 wird ein spezieller Aufbau beschrieben, der eine erste Schicht 1, bestehend aus Polytetrafluorethylen (PTFE) und leitfähigen Teilchen, und eine zweite Schicht 2, die gebildet wird, wenn eine tintenartige kolloidale Lösung, bestehend aus mindestens Katalysatornägerteilchen und festen Polymerelektrolytkomponenten, auf die Schicht 1 aufgebracht wird, aufweist. Die Katalysatorträgerteilchen und das feste Polymerelektrolyt dringen in einige der Poren der Schicht 1 ein, wodurch die Endoberflächen der eindringenden Komponenten uneben werden.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig. Dies ist Voraussetzung dafür, dass Elektroantriebe mit einer Stromversorgung durch Brennstoffzellen erfolgreich mit herkömmlichen Verbrennungsmotoren konkurrieren können.

Zur Erhöhung der Effizienz muss die Leistung der Brennstoffzelle im Teillastbetrieb, das heißt bei niedriger Stromdichte, weiter gesteigert werden. Hierfür ist es erforderlich, die Struktur der den Elektrokatalysator enthaltenden Reaktionsschichten weiter zu verbessern.

Es war daher die Aufgabe der vorliegenden Erfindung, eine verbesserte Membran-Elektrodeneinheit sowie Verfahren zu deren Herstellung bereitzustellen, die die beschriebenen Nachteile des Standes der Technik vermeiden. Insbesondere war es die Aufgabe, die Aktivität der Reaktionsschicht zu erhöhen und somit eine verbesserte Ausnutzung des Edelmetallkatalysators zu ermöglichen.

Diese Aufgabe wird durch eine Membran-Elektrodeneinheit für Polymerelektrolyt-Brennstoffzellen aus einer Polymerelektrolyt-Membran gelöst, welche eine erste und eine zweite Seite aufweist, die beide mit porösen Reaktionsschichten und Gasverteilerschichten in Kontakt stehen, wobei die Reaktionsschichten auf Kohlenstoff geträgerte Edelmetallkatalysatoren und Ionomer enthalten. Die Membran-Elektrodeneinheit ist **dadurch gekennzeichnet, dass** mindestens eine der beiden Reaktionsschichten zusätzlich ein Edelmetallmohr enthält, wobei die das Edelmetallmohr enthaltende Reaktionsschicht aus mehreren hintereinander liegenden Unterschichten besteht, und die direkt mit der Polymerelektrolyt - Membran in kontakt stehende Unterschicht sowohl das Edelmetallmohr als auch den auf Kohlenstoff geträgerten Edelmetallkatalysator enthält.

Unter einem Edelmetallmohr wird im Rahmen dieser Erfindung ein hochdisperses, trägerfreies Edelmetallpulver verstanden, das eine hohe spezifische Oberfläche aufweist.

Die erfindungsgemäßen Membran-Elektrodeneinheiten zeigen eine erhöhte Aktivität der Reaktionsschicht, die sich insbesondere beim Betrieb der Zelle bei niedriger Stromdichte, das heißt bei besonders hoher Brennstoffausnutzung, in Form einer erhöhten Leistung auswirkt.

Diese Leistungssteigerung wird dadurch erreicht, dass die erfindungsgemäße Reaktions-schicht eine Mischung eines Edehnetall-Trägerkatalysators mit einem Edelmetallmohr enthält, die in einer porösen Matrix aus einem Protonen leitenden Ionomer dispergiert ist. Bevorzugt wird als Ionomer ein Tetrafluorethylen-Fluorvinylether-Copolymer mit Säuregruppen verwendet. Der hier beschriebene Aufbau einer Reaktionsschicht aus einem Edelmetallmohr und einem Trägerkatalysator kann sowohl für die Kathode als auch für die Anode der Membran-Blektrodeneinheit eingesetzt werden.

Der Anteil des Edelmetallmohres am gesamten Edelmetallgehalt der betreffenden Reaktionsschicht liegt zwischen 10 und 90 Gew.-%, vorzugsweise zwischen 40 und 90 Gew.-%.

Erfindungsgemäß besteht die das Edelmetallmohr enthaltende Reaktionsschicht selbst wieder aus mehreren hintereinander liegenden Unterschichten, wobei die Mischung aus Edelmetallmohr und auf Kohlenstoff geträgerter Edelmetallkatalysator in der Unterschicht enthalten ist , die direkt mit des Polymerelektrolyt -Membran in Kontakt steht, während die weiteren Unterschichten andere Katalysatoren enthalten können. Besonders bewährt hat sich eine Doppelschicht-Anordnung, wobei die direkt mit der Ionomermembran in Kontakt stehende Unterschicht die Mischung aus Edelmetallmohr und geträgertem Edelmetallkataly6sator enthält, während die zweite Unterschicht mit einem weiteren, elektrokatalytisch aktiven und geträgerten Edelmetallkatalysator ausgerüstet ist.

Die Gesamtdicke der erfindungsgemäßen Reaktionsschicht liegt zwischen 5 und 100 µm, bevorzugt zwischen 10 und 50 µm.

Als Katalysatoren können alle auf dem Gebiet der Brennstoffzellen bekannten Trägerkatalysatoren eingesetzt werden. Als Trägermaterial dient feinteiliger, elektrisch leitfähiger Kohlenstoff. Bevorzugt werden Ruße, Graphit oder Aktivkohlen verwendet. Die eingesetzten Trägerkatalysatoren auf Ruß können 5 bis 80 Gew.-%; bevorzugt 30 - 60 Gew.-% Edelmetall enthalten.

Die eingesetzten Edelmetallmohre weisen eine Edelmetalloberfläche von mindestens 15 m²/g Edelmetall, bevorzugt mindestens 30 m²/g auf.

Geeignete Edelmetalle für die Trägerkatalysatoren als auch für die Edelmetallmohre sind die Metalle der Platingruppe Platin, Palladium, Rhodium oder Legierungen davon.

Sie können als weitere Legienmgszusätze Ruthenium, Kobalt, Chrom, Wolfram, Molybdän, Vanadium, Eisen, Kupfer und Nickel allein oder in Kombination enthalten.

Abhängig von der Schichtdicke der Elektrode sind Flächenkonzentrationen an Edelmetall in den Reaktionsschichten zwischen 0,01 und 5 mg Edelmetall/cm² vorteilhaft.

Zur Herstellung der erfindungsgemäßen Membran-Elektrodeneinheit kann das folgende Verfahren eingesetzt werden:
a) Aufbringen der das Edelmetallmohr enthaltenden Unterschicht auf die erste Seite der Polymerelektrolyt-Membran umfassend die folgenden Schritte:
   - Anfertigen einer Tinte durch Mischen des Edelmetallmohres und des geträgerten Edelmetallkatalysators in einer Lösung aus einem Protonen leitenden Ionomer in einem Lösungsmittel,
   - Dispergieren und Homogenisieren der Tinte,
   - Beschichten der ersten Seite der Polymerelektrolyt-Membran mit der Tinte,
   - Fertigstellen der Unterschicht durch Trocknen der Beschichtung, (b, Aufbringen der weiteren Unterschicht,
b) Aufbringen der weiteren Unterschichten,
c) Aufbringen der zweiten Reaktionsschicht auf die zweite Seite der Polymerelektrolyt-Membran und
d) Kontaktieren der Reaktionsschichten mit den Gasverteilerschichten.

Die Konzentration des Ionomers in der Lösung beträgt bevorzugt 1 bis 10 Gew.-%, bezogen auf das Gesamtgewicht der Lösung. Beim Trocknen der Tinten verdampfen die Lösungsmittel und ergeben eine Reaktionsschicht mit hoher Porosität und einer hohen Aktivität.

Als Lösungsmittel kommen alle Medien in Frage, die das eingesetzte, Ionen leitende Polymer lösen können. Dies können polare, aprotische Lösungsmittel, wie Dimethylformamid oder Dimethylsulfoxid sein. Ebenfalls geeignet sind ein- und mehrwertige Alkohole, Glykole sowie Glykoletheralkohole und Glykolether. Beispiele für geeignete ein- oder mehrwertige alkoholische Lösungsmittel sind Isopropanol, Propylenglykol, Dipropylenglykol, Glyzerin, Hexylenglykol.

Für die Dispergierung und Homogenisierung der Tinte können bekannte Hilfsmittel zum Einsatz kommen, wie zum Beispiel Hochgeschwindigkeitsrührer, Ultrascballbäder oder Dreiwalzwerke.

Die homogenisierte Tinte kann mittels verschiedener Techniken auf die Polymerelektrolyt-Membran aufgebracht werden. Hierzu gehören zum Beispiel das Sprühen, Pinseln, Streichen oder Drucken.

Die Trocknung der aufgebrachten Reaktionsschichten sollte bei Temperaturen zwischen 60 und 140°C bevorzugt zwischen 70 und 120°C, erfolgen. Die Reaktionsschichten weisen Schichtdicken zwischen 5 und 100µm bevorzugt zwischen 10 und 50 µm auf. Unterhalb einer Dicke von 5 µm wird die Schicht aufgrund ihrer porösen Struktur unegelmäßig. Daraus resultiert eine verminderte elektrische Leitfähigkeit. Oberhalb von 100 µm nimmt die elektrochemische Nutzbarkeit der Reaktionsschicht deutlich ab. Für die häufigsten Anwendungsfälle haben sich Schichtdicken zwischen 15 und 50 µm besonders bewährt.

Polymerelektrolyt-Membranen und auch das in den Reaktionsschichten enthaltenen Ionomer können in einer azidischen, Protonen leitenden H⁺-Form oder nach Austausch der Protonen gegen einwertige Ionen wie zum Beispiel Na⁺ und K⁺ in einer nichtazidischen Na⁺- oder K⁺-Form zur Herstellung der Membran-Elektrodeneinheiten eingesetzt werden. Die nichtazidische Form der Polymermembranen ist gewöhnlich gegenüber Temperaturbelastungen beständiger als ihre azidische Form und wird deshalb bevorzugt verwendet. Vor Gebrauch der Membran-Elektrodeneinheit muss der Polymerelektrolyt jedoch erst wieder in seine azidische, Protonen leitende Form überführt werden. Dies geschieht durch die so genannte Rück-Protonierung. Die Rück-Protonierung erfolgt durch Behandeln der Membran-Elektrodeneinheiten in Schwefelsäure.

Die folgenden Beispiele und Figuren verdeutlichen das Wesen der Erfindung. Es zeigen:
**Figur 1****:** (nicht erfindungsgemäß) Aufbau einer Membran-Elektrodeneinheit
**Figur 2****:** Aufbau einer Reaktionsschicht mit einer Mischung aus Edelmetallmohr und Pt/C-Trägerkatalysator in einer Schicht
**Figur 3****:** Aufbau der Doppelsehicht-Anordnung von Beispiel 2
**Figur 4****:** Zellspannung in Abhängigkeit von der Stromdichte bei Wasserstoff/Luftbetrieb für die MEE der Beispiele 1 und 2 und von Vergleichsbeispiel 1

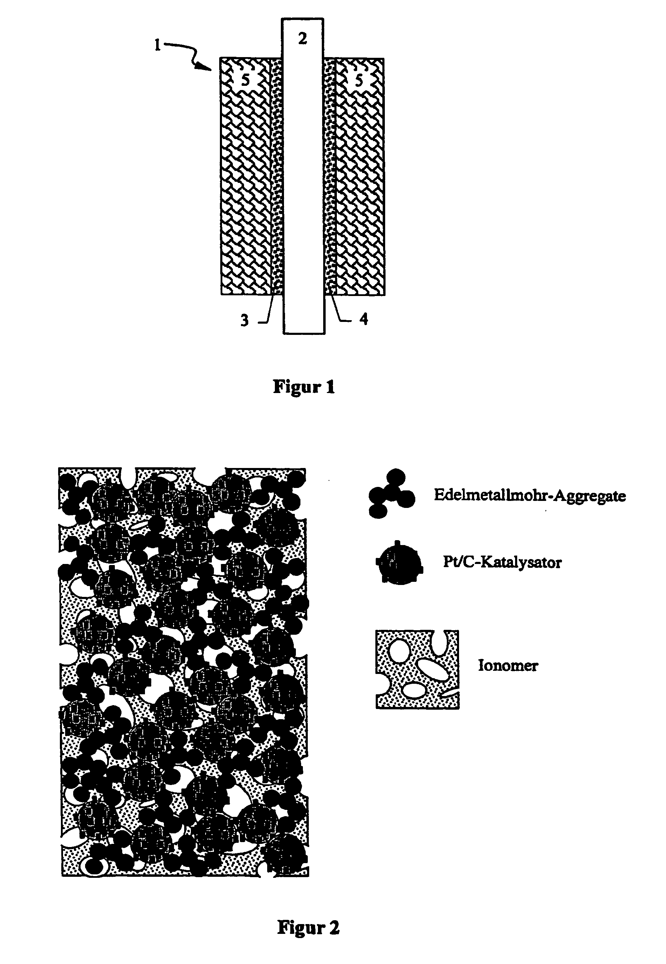

Figur 1 zeigt den Aufbau einer Membran-Elektrodeneinheit (1). (2) bezeichnet die Protonen leitende Ionomermembran. Diese Membran ist auf beiden Seiten mit den Reaktionsschichten (3) und (4) beschichtet, von denen die eine die Anode und die zweite die Kathode der Membran-Elektrodeneinheit bildet. Die Reaktionsschichten enthalten Edelmetallkatalysatoren, die in der Anodenschicht als Brennstoff zugeführten Wasserstoff oxidieren und in der Kathodenschicht Sauerstoff unter Bildung von Wasser reduzieren. Wird als Brenngas ein durch Reformierung von Kohlenwasserstoffen erhaltenes Gasgemisch aus Wasserstoff, Kohlendioxid und geringe Mengen von Kohlenmonoxid verwendet, so wird im allgemeinen als Anodenkatalysator ein auf Kohlenstoffpartikeln geträgerter Platin/Ruthenium-Legierungskatalysator (PtRu/C) eingesetzt, der eine bessere Vergiftimgsrcsistenz gegenüber Kohlenmonoxid aufweist als reine Platinkatalysatoren auf Kohlenstoffpartikeln (Pt/C). Als Kathodenkatalysator wird im Stand der Technik gewöhnlich ein Pt/C-Trägerkatalysator eingesetzt.

Zur Versorgung der Reaktionsschichten (3) und (4) mit den Reaktionsmedien sowie Wasser zur Befeuchtung der Ionomermembran und zur Abführung der Reaktionsprodukte und unverbrauchter Reaktionsmedien stehen die Reaktionsschichten mit so genannten Gasverteilerschichten (5) in Kontakt. Es handelt sich dabei in der Regel um poröse und elektrisch leitfähige Kohlefaserpapiete oder gewebte oder nicht gewebte Kohlevliese.

Figur 2 zeigt schematisch den Aufbau einer erfindungsgemäßen Reaktionsschicht, welche eine Mischung aus einem Pt/C-Trägerkatalysator und einem Edelmetallmohr in einem Ionomer enthält. Das Edelmetallmohr liegt gewöhnlich in Form von primären Metallpartikeln vor, die zu größeren Aggregaten verwachsen sind. Der Pt/C-Trägerkatalysator enthält Platin-Nanopartikel (in Figur 2 als schwarze Rechtecke dargestellt) auf der Oberfläche von feinteiligen Kohlenstoffputikeln, üblicherweise RuB.

Die Beispiele 1 (Referenzbeispiel) bis 2 beschreiben die Herstellung von Membran-Elekäodeneinheiten, während das Vergleichsbeispiel VB1 die Herstellung einer Membran-Elektrodeneinheit ohne Zusatz von Edelmetallmohr zeigt.

Die Polymemlektrolyt-Membranen und das Ionomer für die Reaktionsschichten wurden jeweils in ihrer nicht-azidischen Form eingesetzt und nach Abschluss des Herstellungsprozesses wieder mit Hilfe von Schwefelsäure in ihre azidische, Protonen leitende Modifikation überführt.

Zur Herstellung der erfindungsgemäßen Membran-Elektrodeneinheiten und der Membran-Elektrodeneinheit nach Vergleichsbeispiel VB1 wurden die folgenden Tinten angefertigt :

| | | | |
|---|---|---|---|
| **Tinte A:** | Katalysator | 40 % Pt auf Ruß Vulcan^{®} XC 72 | 5,53 g |
| | Nafion-Lösung | 4,2 Gew.-% in Propylenglykol | 43,92 g |
| | Natronlauge | 15 Gew.-% in Wasser | 0,59 g |
| **Tinte B:** | Katalysator: | 40 % PtRu (1:1) auf Ruß Vulcan^{®} XC 72 | 5,45 g |
| | Nafion-Lösung | 4,2 Gew.-% in Propylenglykol | 43,13 g |
| | Natronlauge | 15 Gew.-% in Wasser | 0,59 g |
| **Tinte C:** | Katalysator: | 40 % Pt auf Ruß Vulcan^{®} XC 72 | 5,12 g |
| | Platinmohr | 40 m²/g | 5,12 g |
| | Nafion-Lösung | 4,2 Gew.-% in Propylenglykol | 40,46 g |
| | Natronlauge | 15 Gew.-% in Wasser | 0,55 g |

Die jeweiligen Bestandteile der obigen Rezepturen wurden miteinander vermischt und anschließend mit einem Dreiwalzwerk sorgfältig homogenisiert.

Die Katalysatortinte B diente in den folgenden Beispielen jeweils zur Herstellung der Anodenschichten, während die Tinten A und C zur Herstellung der Kathodenschichten verwendet wurden.

### Vergleichsbeispiel 1 (VB1):

Die Tinte A wurde im Siebdruckverfahren auf eine Nafion® 112 - Membran (Dicke 50 µm) in der Na⁺-Form aufgedruckt und bei 90°C getrocknet. Anschließend wurde die Rückseite der Membran auf die gleiche Weise mit der Katalysatortinte B beschichtet. Die Rück-Protonierung erfolgte in 0,5 M Schwefelsäure. Die Platinbeladung der Kathodenschicht betrug 0,4 mg Pt/cm², die der Anodenschicht 0,3 mg Pt/cm². Das entsprach einer Gesamtbeladung der beschichteten Membran mit Platin von 0,7 mg/cm². Die Schichtdicken lagen im Bereich zwischen 15 und 20 µm. Die bedruckte Fläche betrug jeweils 50 cm².

Nach Beschichtung der Membran wurden zur Fertigstellung der Membran-Elektrodeneinheit auf die Anoden- und Kathodenschicht Gasverteilersehichten anfgelegt.

Als Gasverteilerschichten dienten hydrophobierte und mit einer feinporigen Rußschicht, einer so genannten Ausgleichsschicht, beschichtete Kohlefaserpapiere. Die Kohlefaserpapiere wurden zunächst in einem Tauchverfahren mit einer PTFE-Dispersion (Hostaflon TF5235 von Dyneon) imprägniert, getrocknet und bei 350°C calciniert. Der PTFE-Gehalt der Anoden-Gasverteilerschicht betrug 16 Gew.-% und der der Kathoden-Gasverteilerscbicht 8 Gew.-%. Anschließend wurden diese Kohlefaserpapiere einseitig mit einer Paste aus Ruß Vulcan XC72 und PTFE beschichtet, getrocknet und wiederum calciniert. Das Verhältnis der Gewichtsanteile von Ruß und PTFE in dieser Paste betrug 7 : 3. Die Auftragsstärke der getrockneten Paste war 2,5 mg/cm².

Die so behandelten Kohlefaserpapiere wurden dann zur Bildung der Membran-Elektrodeneinheit auf die Anoden- und Kathodenschicht aufgelegt.

### Beispiel 1(Referenzbeispiel):

Die Tinte C wurde im Siebdruckverfahren auf eine Nafion® 112 - Membran in der Na⁺-Form aufgedruckt und bei 90°C getrocknet. Anschließend wurde die Rückseite der Membran auf die gleiche Weise mit der Katalysatortinte B beschichtet. Die Rück-Protonierung erfolgte in 0,5 M Schwefelsäure. Die Platinbeladung der Kathodenschicht betrug 0,35 mg Pt/cm², die der Anodenschicht 0,3 mg Pt/cm². Das entsprach einer Gesamtbeladung der beschichteten Membran mit Platin von 0,65 mg/cm². Die Schichtdikken lagen im Bereich zwischen 10 und 20 µm. Die bedruckte Fläche betrug jeweils 50 cm².

Zur Fertigstellung der Membran-Elektrodeneinheit wurde die beschichtete Membran wie in Vergleichsbeispiel 1 beschrieben mit Gasverteilerschichten kontaktiert.

### Beispiel 2:

Die Tinte C wurde im Siebdruckverfahren auf eine Nafion® 112 - Membran in der Na⁺-Form aufgedruckt und bei 90°C getrocknet. Anschließend wurde eine weitere Beschichtung dieser Seite mit der Tinte A durchgeführt. Danach wurde die Rückseite der Membran auf die gleiche Weise mit der Katalysatortinte B beschichtet. Die Reprotonierung erfolgte in 0,5 M Schwefelsäure. Die Platinbeladung der Kathodenschicht betrug 0,45 mg Pt/cm², die der Anodenschicht 0,3 mg Pt/cm². Das entsprach einer Gesamtbeladung der beschichteten Membran mit Platin von 0,75 mg/cm². Die Schichtdicken lagen im Bereich zwischen 15 und 20 µm. Die bedruckte Fläche betrug jeweils 50 cm².

Zur Fertigstellung der erfindungsgemäßen Membran-Elektrodeneinheit wurde die beschichtete Membran wie in Vergleichsbeispiel 1 beschrieben mit Gasverteüenchichten kontaktiert.

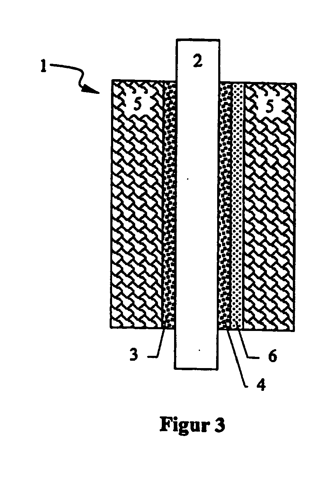

Die Struktur der so hergestellten Membran-Elektiodeneinheit ist schematisch in Figur 3 dargestellt. Die Anodenschicht (3) enthält den PtRu/C-Katalysator der Katalysatortinte B. Die Kathode der Membran-Elektrodeneinheit ist aus zwei Reaktionsschichten zusammengesetzt, wobei die auf der Membran aufliegende Schicht (4) eine Mischung aus Pt/C-Trägerkatalysator und Platinmohr enthält und unter Verwendung von Tinte C hergestellt wurde. Die zweite Reaktionsschicht (6) wurde mit Tinte A hergestellt und enthält dementsprechend als Katalysator nur den Pt/C-Trägedcatalysator.

### Ermittlung der elektrochemischen Eigenschaften:

Alle Membran-Elektrodeneinheiten wurden in einer PEM-Brennstoffzelle mit einer Fläche der Elektrode von 50 cm² im drucklosen Wasserstoff/Luft-Betrieb (1bar/1bar) getestet. Die Zelltemperatur betrug 70°C. Die Reaktionsgase Wasserstoff und Luft wurden jeweils in einem Befeuchter bei 70°C mit Wasserdampf gesättigt. Der Gasfluß wurde auf eine Stöchiometrie von 1,5 für Wasserstoff und 2,0 für Luft bei einer Stromdichte von 1 A/cm² eingestellt.

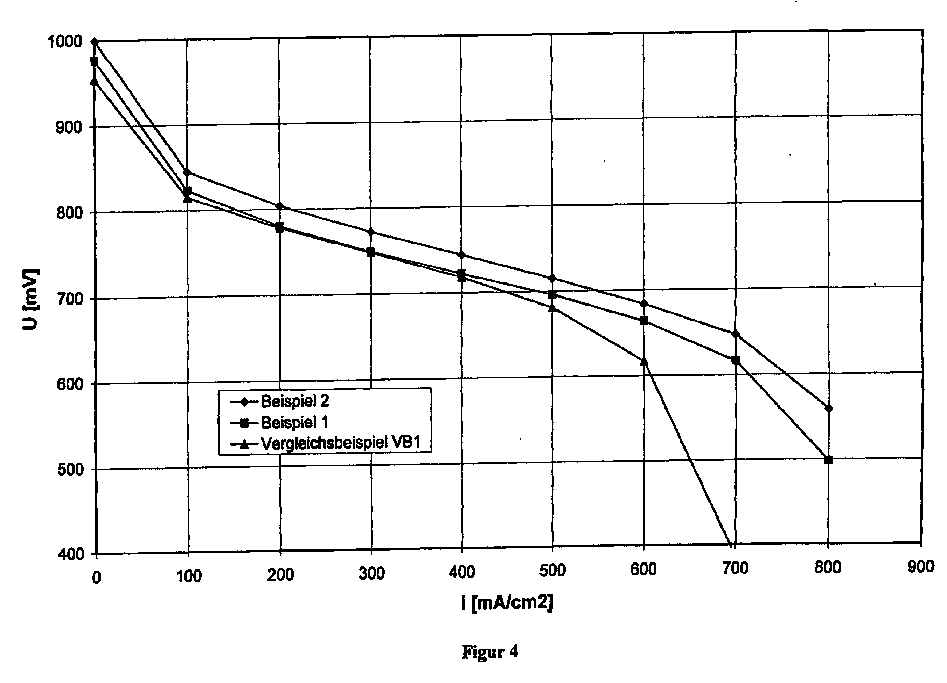

Die Zellspannungen im Luftbetrieb in Abhängigkeit von der Stromdichte sind in Figur 4 für die Zellen von Vergleichsbeispiel 1 und der Beispiele 1 (Referenzbeispiel) und 2 dargestellt. Man erkennt, dass die erfindungsgemäße Membran-Elektrodeneinheit eine deutlich verbesserte elektrische Leistung im Vergleich zum Stand der Technik (VB1) liefert. Dies gilt besonders für den Bereich niedriger Stromdichte, in welchem typischerweise eine hohe Effizienz der Energieumwandlung angestrebt wird.

Tabelle 3 zeigt die bei einer Belastung der Zellen mit einer Stromdichte von 100 mA/cm² und 500 mA/cm² noch gemessenen Zellspannungen.

**Tabelle 3: Zellspannungenim Wasserstoff/Luftbetrieb bei 100 und 500 mA/cm²**

| Beispiel | Zellspannung bei 100 mA/cm² [mV] | Zellspannung bei 500 mA/cm² [mV] |
|---|---|---|
| Vergleichsbeispiel 1 | 815 | 681 |
| Beispiel 1 | 823 | 696 |
| Beispiel 2 | 845 | 715 |

## Patentansprüche

1. Membran-Elektrodeneinheit für Polymerelektrolyt-Brennstoffzellen aus einer Polymerelektrolyt-Membran, welche eine erste und eine zweite Seite aufweist, die beide mit porösen Reaktionsschichten und Gasverteilerschichten in Kontakt stehen, wobei die Reaktionsschichten auf Kohlenstoff geträgerte Edelmetallkatalysatoren und Ionomer enthalten und mindestens eine der beiden Reaktionsschichten zusätzlich ein Edelmetallmohr enthält, wobei die das Edelmetallmohr enthaltende Reaktionsschicht aus mehreren hintereinander liegenden Unterschichten besteht, und die direkt mit der Polymerelektrolyt-Membran in Kontakt stehende Unterschicht sowohl das Edelmetallmohr als auch den auf Kohlenstoff geträgerten Edelmetallkatalysator enthält.

2. Membran-Elektrodeneinheit nach Anspruch 1, wobei der Anteil des Edelmetallmohres 10 bis 90 Gewichtsprozent des gesamten Edelmetallgehaltes der betreffenden Reaktionsschicht beträgt.

3. Membran-Elektrodeneinheit nach Anspruch 1, wobei die das Edelmetallmohr enthaltende Reaktionsschicht aus zwei hintereinander liegenden Unterschichten besteht, wobei die direkt mit der Polymerelektrolyt-Membran in Kontakt stehende Unterschicht das Edelmetallmohr und den auf Kohlenstoff geträgerten Edelmetallkatalysator enthält und die zweite Unterschicht einen weiteren geträgerten Edelmetallkatalysator enthält.

4. Membran-Elektrodeneinheit nach einem der Ansprüche 1 bis 3, wobei die Gesamtdicke einer Reaktionsschicht zwischen 5 und 100 µm liegt.

5. Membran-Elektrodeneinheit nach Anspruch 4, wobei die Gesamtdicke einer Reaktionsschicht zwischen 10 und 50 µm liegt.

6. Membran-Elektrodeneinheit nach Anspruch 1, wobei das Ionomer ein Tetrafluorethylen-Fluorvinylether-Copolymer mit Säuregruppen ist.

7. Membran-Elektrodeneinheit nach Anspruch 1, wobei der Edelmetallgehalt jeder Elektrode 0,01 bis 5 mg Metall/cm² beträgt.

8. Membran-Elektrodeneinheit nach Anspruch 1, wobei die geträgerten Edelmetallkatalysatoren die Platingruppenmetalle Platin, Palladium, Rhodium oder Legierungen dieser Platingruppenmetalle enthalten.

9. Membran-Elektrodeneinheit nach Anspruch 8, wobei die geträgerten Edelmetallkatalysatoren als weitere Legierungszusätze Ruthenium, Kobalt, Chrom, Wolfram, Molybdän, Vanadium, Eisen, Kupfer und Nickel allein oder in Kombination enthalten.

10. Membran-Elektrodeneinheit nach Anspruch 1, wobei das Edelmetallmohr die Platingruppenmetalle Platin, Palladium, Rhodium oder Legierungen dieser Platingruppenmetalle enthält.

11. Membran-Elektrodeneinheit nach Anspruch 10, wobei das Edelmetallmohr als weitere Legierungszusätze Ruthenium, Kobalt, Chrom, Wolfram, Molybdän, Vanadium, Eisen, Kupfer und Nickel allein oder in Kombination enthält.

12. Membran-Elektrodeneinheit nach Anspruch 10 oder 11, wobei die Metalloberfläche des eingesetzten Edelmetallmohres mindestens 15 m²/g beträgt.

13. Membran-Elektrodeneinheit nach Anspruch 12, wobei die Metalloberfläche des eingesetzten Edelmetallmohres mindestens 30 m²/g beträgt.

14. Verfahren zur Herstellung einer Membran-Elektrodeneinheit nach einem der Ansprüche 1 bis 13, umfassend die Schritte:
a) Aufbringen der das Edelmetallmohr enthaltenden Unterschicht auf die erste Seite der Polymerelektrolyt-Membran umfassend die folgenden Schritte:
• Anfertigen einer Tinte durch Mischen des Edelmetallmohres und des geträgerten Edelmetallkatalysators in einer Lösung aus einem Ionen leitenden Polymer in einem Lösungsmittel,
• Dispergieren und Homogenisieren der Tinte,
• Beschichten der ersten Seite der Polymerelektrolyt-Membran mit der Tinte,
• Fertigstellen der Unterschicht durch Trocknen der Beschichtung,
b) Aufbringen der weiteren Unterschichten,
c) Aufbringen der zweiten Reaktionsschicht auf die zweite Seite der Polymerelektrolyt-Membran und
d) Kontaktieren der Reaktionsschichten mit den Gasverteilerschichten.

15. Verfahren nach Anspruch 14, wobei das Polymer in der Membran und das Ionomer für die Reaktionsschichten in einer nichtazidischen Form vorliegen, und nach Fertigstellen der beiden Reaktionsschichten wieder in die azidische Form überführt werden.

16. Verfahren nach Anspruch 14 oder 15, wobei das Ionomer ein Tetrafluorethylen-Fluorvinylether-Copolymer mit Säuregruppen ist.

17. Verfahren nach Anspruch 14, wobei das Ionomer in einer Konzentration von 1 bis 10 Gew.-%, bezogen auf das Gesamtgewicht der Lösung, in dem Lösungsmittel gelöst ist.

## Claims

1. A membrane electrode unit for polymer electrolyte fuel cells consisting of a polymer electrolyte membrane having a first and a second side which are both in contact with porous reaction layers and gas distribution layers, wherein the reaction layers contain noble metal catalysts supported on carbon as well as ionomer, and at least one of the two reaction layers additionally contains a noble metal black, wherein the reaction layer containing the noble metal black consists of a plurality of successive sublayers and the sublayer which is in direct contact with the polymer electrolyte membrane contains both the noble metal black and the noble metal catalyst supported on carbon.

2. The membrane electrode unit according to claim 1, wherein the proportion of noble metal black is from 10 to 90% by weight of the total noble metal content of the respective reaction layer.

3. The membrane electrode unit according to claim 1, wherein the reaction layer containing the noble metal black consists of two successive sublayers, wherein the sublayer which is in direct contact with the polymer electrolyte membrane contains the noble metal black and the noble metal catalyst supported on carbon and the second sublayer contains a further supported noble metal catalyst.

4. The membrane electrode unit according to any one of claims 1 to 3, wherein the total thickness of a reaction layer is between 5 and 100 µm.

5. The membrane electrode unit according to claim 4, wherein the total thickness of a reaction layer is between 10 and 50 µm.

6. The membrane electrode unit according to claim 1, wherein the ionomer is a tetrafluoroethylene-fluorovinylether copolymer with acid groups.

7. The membrane electrode unit according to claim 1, wherein the noble metal content of each electrode is from 0.01 to 5 mg metal/cm².

8. The membrane electrode unit according to claim 1, wherein the supported noble metal catalysts contain the platinum-group metals platinum, palladium, rhodium or alloys of these platinum group metals.

9. The membrane electrode unit according to claim 8, wherein the supported noble metal catalysts contain ruthenium, cobalt, chromium, tungsten, molybdenum, vanadium, iron, copper and nickel, alone or in combination, as further alloying additives.

10. The membrane electrode unit according to claim 1, wherein the noble metal black contains the platinum-group metals platinum, palladium, rhodium or alloys of these platinum group metals.

11. The membrane electrode unit according to claim 10, wherein the noble metal black contains ruthenium, cobalt, chromium, tungsten, molybdenum, vanadium, iron, copper and nickel, alone or in combination, as further alloying additives.

12. The membrane electrode unit according to claim 10 or 11, wherein the metal surface area of the noble metal black used is at least 15 m²/g.

13. The membrane electrode unit according to claim 12, wherein the metal surface area of the noble metal black used is at least 30 m²/g.

14. A method of producing a membrane electrode unit according to any one of claims 1 to 13, comprising the steps of:
a) application of the sublayer containing the noble metal black to the first side of the polymer electrolyte membrane, comprising the following steps of:
• preparing an ink by mixing the noble metal black and the supported noble metal catalyst in a solution of an ion-conducting polymer in a solvent,
• dispersing and homogenizing the ink,
• coating the first side of the polymer electrolyte membrane with the ink,
• finishing the sublayer by drying the coating,
b) application of the further sublayers,
c) application of the second reaction layer onto the second side of the polymer electrolyte membrane, and
d) placing the reaction layers in contact with the gas distribution layers.

15. The method according to claim 14, wherein the polymer in the membrane and the ionomer for the reaction layers are present in a non-acidic form and are converted into the acidic form again after finishing the two reaction layers.

16. The method according to claim 14 or 15, wherein the ionomer is a tetrafluoroethylene-fluorovinylether copolymer with acid groups.

17. The method according to claim 14, wherein the ionomer is dissolved in the solvent at a concentration of 1 to 10% by weight, with respect to the total weight of the solution.

## Revendications

1. Unité d'électrodes à membrane pour piles à combustible à électrolyte polymère constituée d'une membrane électrolytique polymère comportant une première et une seconde face qui sont toutes deux en contact avec des couches réactives poreuses et des couches de répartition de gaz, les couches réactives renfermant des catalyseurs en métaux nobles supportés par du carbone et d'ionomère, et au moins une des deux couches réactives renfermant en outre un métal noble finement divisé, la couche réactive renfermant le métal noble finement divisé étant constituée de plusieurs sous-couches successives, et la sous-couche directement en contact avec la membrane électrolytique polymère renfermant le métal noble finement divisé et également, le catalyseur en métal noble supporté par du carbone.

2. Unité d'électrodes à membrane selon la revendication 1,
dans laquelle
la proportion de métal noble finement divisé, est de 10 à 90 % en poids de la teneur totale en métal noble de la couche réactive correspondante.

3. Unité d'électrodes à membrane selon la revendication 1,
dans laquelle
la couche réactive renfermant le métal noble finement divisé, est constituée de deux sous-couches successives, la sous-couche située directement en contact avec la membrane électrolytique polymère renfermant le métal noble finement divisé et le catalyseur en métal noble supporté par du carbone, et la seconde sous-couche renfermant un autre catalyseur en métal noble supporté.

4. Unité d'électrodes à membrane selon l'une des revendications 1 à 3,
dans laquelle
l'épaisseur totale d'une couche réactive est comprise entre 5 et 100 µm.

5. Unité d'électrodes à membrane selon la revendication 4,
dans laquelle
l'épaisseur totale d'une couche réactive est comprise entre 10 et 50 µm.

6. Unité d'électrode à membrane selon la revendication 1,
dans laquelle
l'ionomère est un copolymère tétrafluoréthylène-fluorovinyléther, renfermant des groupes acides.

7. Unité d'électrodes à membrane selon la revendication 1,
dans laquelle
la teneur en métal noble de chaque électrode est de 0,01 à 5 mg de métal/cm².

8. Unité d'électrodes à membrane selon la revendication 1,
dans laquelle
les catalyseurs en métal noble supportés renferment les métaux du groupe du platine, platine, palladium, rhodium ou des alliages de ces métaux du groupe du platine.

9. Unité d'électrodes à membrane selon la revendication 8,
dans laquelle
les catalyseurs en métal noble supportés renferment en tant qu'autres additifs d'alliage, du ruthénium, du cobalt, du chrome, du tungstène, du molybdène, du vanadium, du fer, du cuivre et du nickel, seuls ou en combinaison.

10. Unité d'électrodes à membrane selon la revendication 1,
dans laquelle
le métal noble finement divisé renferme les métaux du groupe du platine, platine, palladium, rhodium ou des alliages de ces métaux du groupe du platine.

11. Unité d'électrodes à membrane selon la revendication 10,
dans laquelle
le métal noble finement divisé renferme en tant qu'autres additifs d'alliage, du ruthénium, du cobalt, du chrome, du tungstène, du molybdène, du vanadium, du fer, du cuivre, et du nickel, seuls ou en combinaison.

12. Unité d'électrodes à membrane selon la revendication 10 ou 11,
dans laquelle
la surface métallique du métal noble finement divisé mis en oeuvre est d'au moins 15 m²/g.

13. Unité d'électrodes à membrane selon la revendication 12,
dans laquelle
la surface métallique du métal noble finement divisé mis en oeuvre est d'au moins 30 m²/g.

14. Procédé d'obtention d'une unité d'électrodes à membrane selon l'une des revendications 1 à 13, comportant les étapes consistant à :
a) appliquer la sous-couche renfermant le métal noble finement divisé sur la première face de la membrane électrolytique polymère par les étapes suivantes :
* fabrication d'une encre par mélange du métal noble finement divisé et du catalyseur en métal noble supporté dans une solution d'un polymère conducteur ionique dans un solvant,
* dispersion et homogénéisation de l'encre,
* revêtement de la première face de la membrane électrolytique polymère avec l'encre,
* achèvement de la sous-couche par séchage du revêtement,
b) appliquer les autres sous-couches,
c) appliquer la seconde couche réactive sur la seconde face de la membrane électrolytique polymère, et
d) mettre en contact les couches réactives avec les couches de répartition de gaz.

15. Procédé conforme à la revendication 14, selon lequel
le polymère dans la membrane, et l'ionomère pour les couches réactives, se présentent sous une forme non-azidique, et sont transférés après achèvement des deux couches réactives sous la forme azidique.

16. Procédé conforme à la revendication 14 ou 15,
selon lequel
l'ionomère est un copolymère tétrafluoréthylène-fluorovinyléther renfermant des groupes acides.

17. Procédé conforme à la revendication 14, selon lequel
l'ionomère est dissout dans le solvant à une concentration de 1 à 10 % en poids, par rapport au poids total de la solution.
